# EUROPÄISCHE PATENTSCHRIFT

(11) **EP 2 570 021 B1**
(45) Veröffentlichungstag und Bekanntmachung des Hinweises auf die Patenterteilung: **08.07.2015**
(21) Anmeldenummer: 12006302.9
(22) Anmeldetag: 07.09.2012
(51) Int. Cl.: A01D 90/10

(54) **Transportfahrzeug**
Transport vehicle
Véhicule de transport

(30) Priorität: 16.09.2011 DE 202011105727 U
(43) Veröffentlichungstag der Anmeldung: 20.03.2013
(73) Patentinhaber: Maschinenfabrik Bernard Krone GmbH, 48480 Spelle (DE)
(72) Erfinder: Horstmann, Josef, Dr.-Ing., 49479 Ibbenbüren (DE)

(56) Entgegenhaltungen:
- AT-B- 286 796
- DE-U1-202008 011 744
- US-A- 3 819 072

## Beschreibung

Die Erfindung bezieht sich auf ein Transportfahrzeug für insbesondere landwirtschaftliche Schüttgüter gemäß dem Oberbegriff des Anspruchs 1.

Transportfahrzeuge dieser Art sind weitgehend bekannt und werden insbesondere zum Transport von gehäckselten landwirtschaftlichen Emtegütern eingesetzt. Dazu werden sie von einem Schlepper neben einem Feldhäcksler über ein Feld gezogen und von diesem von oben mit gehäckseltem Gras, Mais oder ähnlichem Erntegut befüllt. Das Ladegut wird dann zumeist auf einem Silo entladen, wobei der allgemein als Kratzboden bekannte Förderboden des Fahrzeugs die Ladung durch das geöffnete Heck hinausbefördert. Für eine bessere, gleichmäßigere Verteilung des Ladeguts sind häufig in der heckseitigen Laderaumöffnung rotierende Dosierwalzen angeordnet. Transportfahrzeuge der beschriebenen Art sind Ladewagen, wie sie unter anderen aus der DE 31 00 762 C2 und der DE 297 06 454 U1 bekannt sind sehr ähnlich, weisen jedoch kein Ladeaggregat zur Aufnahme von Erntegut vom Boden auf.

Durch die ständige Forderung des Marktes nach leistungsfähigeren Ernteketten werden bei den Transportfahrzeugen immer größere Ladekapazitäten bezüglich Volumen und Gewicht verlangt. Grenzen setzen dabei unter anderen höchstzulässige Außenabmessungen der Fahrzeuge im Straßenverkehr und die Forderung nach möglichst geringem Bodendruck der Reifen, um das Einsinken in den Feldboden zu minimieren. Da die zur Minimierung des Bodendrucks notwendigen größeren Raddurchmesser jedoch gleichzeitig eine Anhebung der Ladefläche und damit Reduzierung des Ladevolumens bewirken und zusätzlich durch die Höherlegung des Schwerpunktes die Fahrsicherheit negativ beeinflussen, stößt man bei der Entwicklung an Grenzen, für die Lösungen gesucht werden.

Aus der DE 20 2008 011 744 U1 ist ein Ladewagen zur Aufnahme von am Boden liegendem Erntegut bekannt geworden, bei dem ein, einer Pickup-Aufnahmevorrichtung in Förderrichtung des Erntegutes nachgeordneter Förderrotor zur Beladung eines dem Förderrotor nachgeordneten Laderaumes vorgesehen ist. Weiterhin verfügt der beschriebene Ladewagen über einen Kratzboden, der im vorderen Bereich des Ladewagens gekröpft und nach unten abgesenkt ausgebildet ist. Aufgrund der hohen Lasten, die im Laderaum derartiger Ladewagen transportiert werden können, zeigen sich in der Praxis immer wieder Stabilitätsprobleme in dem Bereich des Ladewagens, in dem eine den Kratzboden tragende Tragrahmenbaugruppe mit einer Anhängevorrichtung zur Ankoppelung des Ladewagens an eine landwirtschaftliche Zug- und Antriebsmaschine verbunden ist.

Demnach liegt der Erfindung die Aufgabe zugrunde, ein Transportfahrzeug mit vergrößerter Ladekapazität zu schaffen, welches zugleich einen Beitrag zu mehr Sicherheit im Straßenverkehr liefert.

Gelöst wird die Aufgabe der Erfindung mit den kennzeichnenden Merkmalen des Anspruchs 1. Weitere vorteilhafte Ausgestaltungen der Erfindung sind den abhängigen Ansprüchen, der Beschreibung und der Zeichnung zu entnehmen.

Erfindungsgemäß wird ein Transportfahrzeug insbesondere für landwirtschaftliche Schüttgüter beansprucht, mit einer an einem Tragrahmen, welcher sich über ein Fahrgestell und Räder zum Boden hin abstützt, angeordneten Anhängevorrichtung zum Anhängen des Transportfahrzeugs an ein Zugfahrzeug, einem von oben zu beladenden Laderaumaufbau mit zu öffnender Rückwand und einer Ladeplattform mit einem Bodenförderer zur Entladung des Laderaums, wobei die Ladeplattform im Bereich zwischen dem Fahrgestell und dem vorderen Ende der Ladeplattform einen in Fahrtrichtung abwärts geneigten Bereich aufweist, wobei der Tragrahmen an seiner vorderen Stirnseite derart ausgebildet ist, dass er zumindest in zwei vertikal beabstandeten Ebenen die Möglichkeit zur gleichzeitigen Einleitung der von der Anhängevorrichtung übertragenen Kräfte bietet, wobei der Abstand der vertikal beabstandeten Ebenen zur gleichzeitigen Einleitung der von der Anhängevorrichtung übertragenen Kräfte in etwa der Höhendifferenz der im vorderen Bereich abgesenkten Ladeplattform entspricht und wobei mit den Anlenkpunkten der Anhängevorrichtung in den vertikal zueinander beabstandeten Ebenen die von der Anhängevorrichtung übertragenen Kräfte als Zugund Druckkräfte in seitliche Rahmendreiecke eingeleitet werden, die der der abgesenkten Ladeplattform angepasste Tragrahmen an den Seiten des Fahrzeugs ausbildet.

Das Transportfahrzeug nach der Erfindung weist eine Ladeplattform auf, welche nach vorne schräg abfällt. Durch diese, bisher bei reinen Transportfahrzeugen nicht gekannte Ausführungsform, wird der durch die immer größeren Räder ebenfalls immer größere Freiraum unterhalb der Ladeplattform vor dem Achsaggregat zumindest teilweise vorteilhaft als Laderaum genutzt. Somit wird ohne Veränderung der Außenabmessungen eine Vergrößerung des Laderaums erzielt.

Die Ausrüstung eines Transportwagens mit einem abgesenkten Ladeboden bringt jedoch noch weitere Vorteile. So bildet der dem abgesenkten Ladeboden angepasste Tragrahmen an den Seiten Dreiecke aus, die dem Fahrzeug mit geringem Aufwand eine besonders hohe Stabilität mit optimaler Kraftverteilung in dem Rahmen verleiht. Insbesondere der bei dieser Rahmenkonstruktion entstehende hohe Stirnbereich des Tragrahmens trägt erfindungsgemäß zu den vorteilhaften Merkmalen bei. In einer bevorzugten Ausführung bilden ein oberer und ein unterer Querträger die Verbindungen zwischen den Rahmenseitenteilen.

Wie aus der bereits erwähnten DE 297 06 454 U1 bekannt, können Ladewagen ähnliche Rahmenkonstruktionen aufweisen. Nachteilig an diesen Fahrzeugen ist jedoch, dass im unteren Stirnbereich keine Querverbindung eingebracht werden kann, da dieser Bereich für das Ladeaggregat frei bleiben muss, was gegenüber dem erfindungsgemäßem Transportfahrzeug eine erhebliche Schwächung des Rahmens darstellt.

Nur durch die Rahmenkonstruktion mit einem möglichst hohen Stirnbereich bietet das Transportfahrzeug nach der Erfindung Anbringungsmöglichkeiten für eine Anhängevorrichtung mit optimaler Krafteinleitung in den Tragrahmen auf verschiedenen Ebenen. Diese Ebenen liegen vorteilhaft in etwa auf Mitte der vorderen Rahmenträgerenden, welche die seitlichen Rahmendreiecke bilden.

In einer besonders vorteilhaften Ausführungsform ist die Anhängevorrichtung mehrteilig und weist einen Aktor zur Verstellung auf. Derartige Anhängvorrichtungen sind als Knickdeichseln bekannt und ermöglichen eine, vorzugsweise durch Hydraulikzylinder betätigte Höhenverstellung der Fahrzeugfront zur Bodenabstandsanpassung beispielsweise beim Überfahren von Silos. Gleichzeitig bieten sie häufig die Funktion einer Deichselfederung für eine komfortable Transportfahrt.

Insbesondere durch neue Anhängemöglichkeiten wie Kugelkupplungen und die damit verbundenen erheblich gestiegenen zulässigen Stützkräfte, wirken in den Anlenkpunkten der Anhängevorrichtung zum Tragrahmen extreme Kräfte. Diese Kräfte wirken bei einem Transportfahrzeug mit flachem Rahmen, wie es in der DE 31 00 762 C2 dargestellt ist, als Moment auf den einzigen Stirnträger, wodurch dieser und die angrenzenden Rahmenteile nachteilig konstruktiv besonders aufwändig und mit hohem Materialeinsatz ausgelegt sein müssen.

Durch die erfindungsgemäße hohe Stirnträgerkonstruktion mit Anlenkpunkten der Anhängvorrichtung in vertikal zueinander beabstandeten Ebenen, werden die von der Anhängevorrichtung übertragenen Kräfte vorteilhaft als Zug- und Druckkräfte in die seitlichen Rahmendreiecke eingeleitet, wodurch Spannungskonzentrationen geschickt vermieden werden.

Das Ergebnis der Erfindung ist somit ein Transportfahrzeug mit erhöhtem Ladevolumen in Material sparender Leichtbauweise und damit erhöhter Zuladung bei gleichzeitig verbesserten Fahreigenschaften durch einen abgesenkten Schwerpunkt und verwindungssteiferen Tragrahmen.

Die Erfindung wird im Folgenden anhand der Zeichnung eines Ausführungsbeispiels nach der Erfindung näher erläutert.
**Fig.1** der Zeichnung zeigt eine schematische Seitenansicht eines erfindungsgemäßen Transportfahrzeugs 1, angehängt an ein Zugfahrzeug;
**Fig. 2** zeigt das Transportfahrzeug 1 aus Fig. 1 in einer perspektivischen Ansicht von schräg vorne.

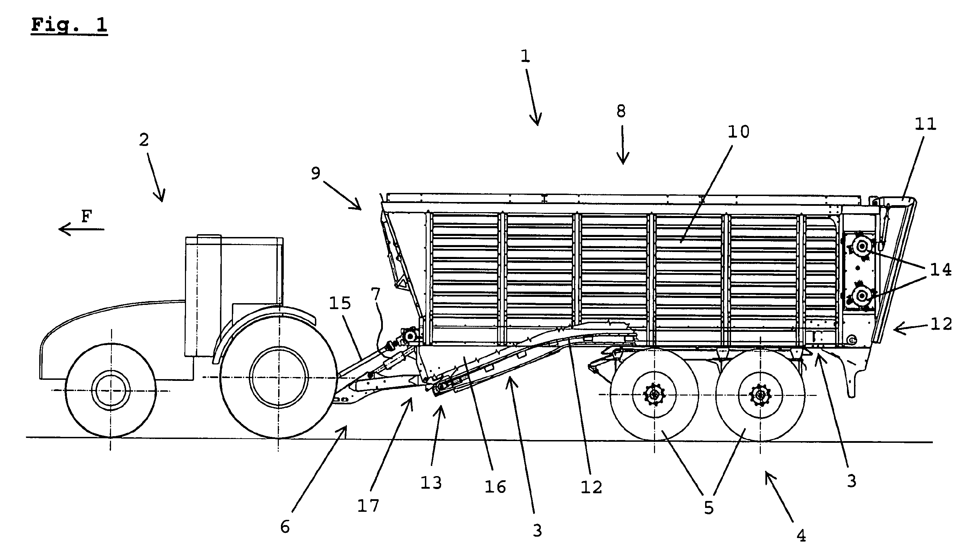

Das Transportfahrzeug 1, welches in Fig.1 an einen landwirtschaftlichen Schlepper 2 angekuppelt gezeigt wird, ist zur besseren Erkennbarkeit teils ohne Verkleidungen und Schutzeinrichtungen und mit teilweise freigelegten Bauteilen dargestellt.

Der Transportwagen 1 weist als Hauptbaugruppe einen Tragrahmen 3 auf, der sich über das Fahrgestell 4 und Räder 5 zum Boden hin abstützt. Beim Ausführungsbeispiel handelt es sich um ein Fahrgestell 4 mit Tandemachse. Ausführungsformen mit nur einer Achse oder aber auch mit drei und mehr Achsen sind ebenfalls möglich. An der in Fahrtrichtung F liegenden, vorderen Stirnseite des Tragrahmens 3 ist die Anhängevorrichtung 6 für die Verbindung des Transportfahrzeugs 1 mit einem Zugfahrzeug 2 angebracht. Die dargestellte Anhängevorrichtung 6 ist mehrteilig und verstellbar als Knickdeichsel ausgeführt. Als Stellantrieb dient hier vorteilhaft ein Hydraulikzylinder 7. Dieser ist vom Schlepperfahrer oder automatisch durch eine Steuereinrichtung fernbedient ansteuerbar und bietet außerdem in Verbindung mit einem Druckspeicher die Funktion einer Deichselfederung zur Verbesserung der Fahreigenschaften und zur Komforterhöhung. In weiteren Ausführungen können auch mehrere Stellantriebe an der Knickdeichsel vorgesehen sein.

Auf den Tragrahmen 3 aufbauend befindet sich der Laderaum 8 des Transportwagens 1. Dieser wird nach außen durch eine im oberen Bereich abklappbare Stirnwand 9, Seitenwände 10 und eine, zum Entladen nach oben zu öffnende Heckklappe 11 begrenzt. Die untere Begrenzung des Laderaums 8 wird durch die Ladeplattform 12 gebildet. Durch die freigelegte Darstellung in Fig. 1 ist die erfindungsgemäße Ausführung der nach vorne abfallenden Ladeplattform 12 mit dem, diese umspannenden Bodenförderer 13 deutlich zu erkennen. Bodenförderer dieser Art sind allgemein auch als Kratzboden bekannt. Förderer anderer Art, wie beispielsweise Schubböden, Abschiebewände, etc. sind ebenfalls vorstellbar, aber erheblich aufwändiger in der Kombination mit einer nicht ebenen Ladeplattform 12. Im Heckbereich des Laderaums 8 des Transportwagens 1 sind außerdem noch Verteilwalzen 14 angeordnet, die während des Entladevorgangs, schnell rotierend angetrieben, für eine gleichmäßige, aufgelockerte Verteilung des Ladegutes sorgen.

Der Antrieb des Kratzbodens 13 und der Verteilwalzen 14 erfolgt vom Zapfwellenanschluss des Schleppers 2 über die Gelenkwelle 15 auf das Transportfahrzeug 1, wobei die Leistungsübertragung vom vorderen Fahrzeugbereich nach hinten durch eine, im Seitenträger des Tragrahmens 3 verlaufende nicht dargestellte Antriebskette erfolgt. Diese besonders wirtschaftliche Antriebsform des Ausführungsbeispiels weist gegenüber Lösungen mit Antriebswellen und Winkelgetrieben oder hydraulischen Lösungen einen besonders guten Wirkungsgrad, einen konstruktiv einfachen Aufbau und damit ein geringes Gewicht und geringere Kosten auf.

In der Seitenansicht der Fig. 1 ist sehr gut zu erkennen, wie durch die nach vorne in Fahrtrichtung F hin schräg abfallende Transportplattform 12 der große Freiraum unter der Plattform 12, der bedingt durch die großen Raddurchmesser vor dem Fahrgestell 4 vorhanden ist, als zusätzlicher Laderaum 7 genutzt wird. Damit einhergehend entstehen gleichzeitig vordere Seitenbereiche 16 des Tragrahmens 3, welche sich in der Form von Dreiecken in etwa vom Fahrgestell 4 bis zum vorderen Ende des Tragrahmens 3 erstrecken. Durch diese Tragrahmengestaltung entsteht erfindungsgemäß ein vorderer Stirnbereich 17 des Tragrahmens 3, der in der Höhe in etwa um das Maß der maximalen Absenkung der Transportplattform 3 im vorderen Endbereich vergrößert ist.

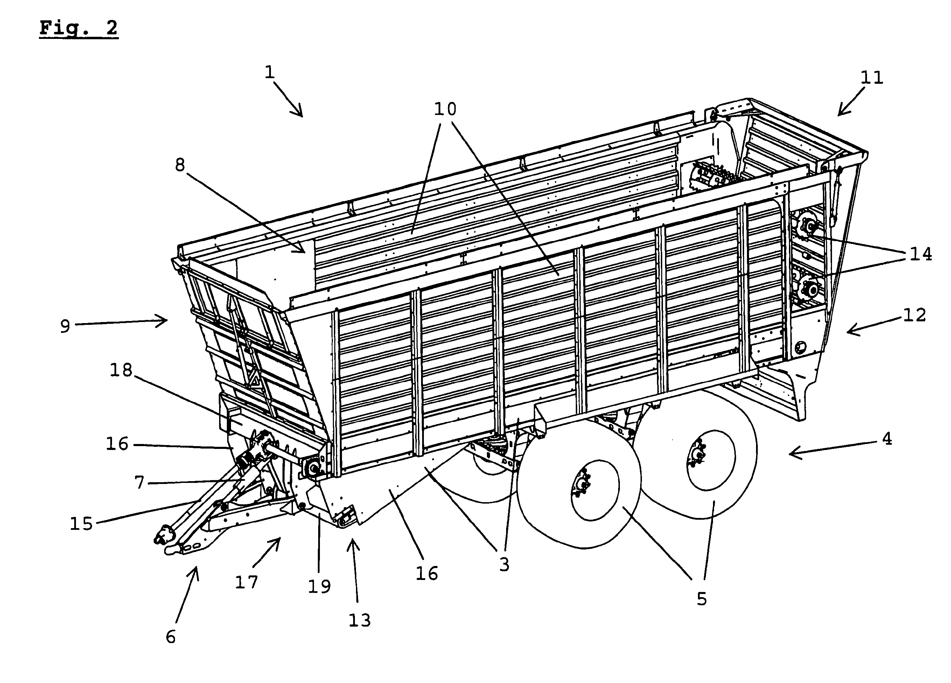

Die perspektivische Ansicht der Fig. 2 zeigt deutlich, wie dieser große geschlossene Stirnbereich 17 optimale Anbindungsmöglichkeiten für die Anhängevorrichtung 6 in Form einer Knickdeichsel bietet. Die Seitenansicht macht deutlich wie ideal die Stützund Zugkräfte, welche die Anhängevorrichtung zu übertragen hat, in den oberen und unteren Bereich des Stirnbereiches 17 des Tragrahmens 3 eingeleitet werden. Dabei konzentrieren sich die Kräfte nicht in einem kleinen begrenzten Bereich am vorderen Ende des Tagrahmens 3, sondern werden unter anderen durch die dreieckige Ausgestaltung der Tragrahmenseitenteile 16 im vorderen Bereich, bis fast in den mittleren Tragrahmenbereich geleitet. Vorteilhaft sind bei dem Fahrzeug 1 des Ausführungsbeispiels, in den Bereichen in denen die Anhängevorrichtung 6 an den Stirnbereich 17 angelenkt ist, ein oberer Querträger 18 und ein unterer Querträger 19 angeordnet, welche die beiden Tragrahmenseitenteile 16 verbinden. In weiteren Ausführungsformen sind an dieser Stelle auch gekantete Blechkonstruktionen oder ähnliche Querverbindungen denkbar. Durch die erfindungsgemäße Anlenkung der Anhängevorrichtung in zwei, mit möglichst großen Abstand zueinander vertikal übereinander liegenden Ebenen an einem Stirnbereich 17, welcher durch Erweiterung des Laderaums nach unten vergrößert ist, ergeben sich große Nutzungsvorteile und eine wirtschaftliche Gestaltung des Transportfahrzeugs 1. Die, durch den hohen geschlossenen Stirnbereich 17 extrem verbesserte Verwindungssteifigkeit des Tragrahmens 3 und der, durch die vordere Erweiterung des Laderaums 7 nach unten verlagerte niedrigere Schwerpunkt, tragen außerdem zu einem verbesserten Fahrverhalten bei. Somit bietet das Transportfahrzeug nach der Erfindung zusätzlich einen Beitrag zu mehr Sicherheit im Straßenverkehr.

## Patentansprüche

1. Transportfahrzeug (1), insbesondere für landwirtschaftliche Schüttgüter, mit einer an einem Tragrahmen (3), welcher sich über ein Fahrgestell (4) und Räder (5) zum Boden hin abstützt, angeordneten Anhängevorrichtung (6) zum Anhängen des Transportfahrzeugs (1) an ein Zugfahrzeug, einem von oben zu beladenden Laderaumaufbau mit zu öffnender Rückwand (11) und einer Ladeplattform (12) mit einem Bodenförderer (13) zur Entladung des Laderaums (8), wobei die Ladeplattform (12) im Bereich zwischen dem Fahrgestell (4) und dem vorderen Ende der Ladeplattform (12) einen in Fahrtrichtung (F) abwärts geneigten Bereich aufweist, **dadurch gekennzeichnet, dass** der Tragrahmen (3) an seiner vorderen Stirnseite (17) derart ausgebildet ist, dass er zumindest in zwei vertikal beabstandeten Ebenen die Möglichkeit zur gleichzeitigen Einleitung der von der Anhängevorrichtung (6) übertragenen Kräfte bietet, wobei der Abstand der vertikal beabstandeten Ebenen zur gleichzeitigen Einleitung der von der Anhängevorrichtung (6) übertragenen Kräfte in etwa der Höhendifferenz der im vorderen Bereich abgesenkten Ladeplattform (12) entspricht und wobei mit den Anlenkpunkten der Anhängevorrichtung (6) in den vertikal zueinander beabstandeten Ebenen die von der Anhängevorrichtung (6) übertragenen Kräfte als Zug- und Druckkräfte in seitliche Rahmendreiecke eingeleitet werden, die der der abgesenkten Ladeplattform angepasste Tragrahmen an den Seiten des Fahrzeugs ausbildet.

2. Transportfahrzeug (1) nach Anspruch 1, **dadurch gekennzeichnet, dass** die Anhängevorrichtung (6) mehrteilig ausgeführt ist und eine Verstelleinrichtung aufweist.

3. Transportfahrzeug (1) nach Anspruch 2, **dadurch gekennzeichnet, dass** die mehrteilige Anhängevorrichtung (6) zumindest einen fernbedienbaren Aktor (7) aufweist.

4. Transportfahrzeug (1) nach zumindest einem der vorhergehenden Ansprüche, **dadurch gekennzeichnet, dass** der Bodenförderer (13) aus zumindest einem umlaufenden Endlosförderer besteht.

5. Transportfahrzeug (1) nach zumindest einem der vorhergehenden Ansprüche, **dadurch gekennzeichnet, dass** der Tragrahmen (3) an seiner in Fahrtrichtung (F) liegenden Stirnseite (17) zumindest zwei, quer zur Fahrtrichtung ausgerichtete Stirnträger (18, 19) aufweist.

6. Transportfahrzeug (1) nach Anspruch 6, **dadurch gekennzeichnet, dass** die Stirnträger (18, 19) mit einem vertikalen Abstand parallel zueinander ausgerichtet sind.

7. Transportfahrzeug (1) nach zumindest einem der vorhergehenden Ansprüche, **dadurch gekennzeichnet, dass** die Anhängevorrichtung (6) sowohl mit dem oberen (18), als auch mit dem unteren (19) der zumindest zwei Stirnträger (18, 19) verbunden ist.

## Claims

1. Transport vehicle (1), in particular for agricultural bulk goods, comprising a towbar (6), arranged on a support frame (3) which is supported towards the ground by means of a chassis (4) and wheels (5), for coupling the transport vehicle (1) to a towing vehicle, a loading chamber structure, to be loaded from above and having a rear wall (11) which can be opened, and a loading platform (12) comprising a base conveyor (13) for unloading the loading chamber (8), the loading platform (12) comprising a region which is inclined downwards in the direction of travel (F) in the region between the chassis (4) and the front end of the loading platform (12), **characterised in that** the front end face (17) of the support frame (3) is formed such that, at least in two vertically spaced planes, it is possible to simultaneously introduce the forces transferred by the towbar (6), the distance between the vertically spaced planes for simultaneously introducing the forces transferred by the towbar (6) corresponding approximately to the height difference of the lowered loading platform (12) in the front region, and the forces transferred by the towbar (6) being introduced into lateral frame-triangles as tensile and compressive forces when the linkage points of the towbar (6) are in the vertically spaced planes, which frame-triangles form the support frame adjusted to the lowered loading platform at the sides of the vehicle.

2. Transport vehicle (1) according to claim 1, **characterised in that** the towbar (6) is configured in multiple parts and comprises an adjustment device.

3. Transport vehicle (1) according to claim 2, **characterised in that** the multi-part towbar (6) comprises at least one remote-controlled actuator (7).

4. Transport vehicle (1) according to at least one of the preceding claims, **characterised in that** the base conveyor (13) consists of at least one circulating continuous conveyor.

5. Transport vehicle (1) according to at least one of the preceding claims, **characterised in that** the end face (17) of the support frame (3) in the direction of travel (F) comprises at least two front supports (18, 19) oriented transversely to the direction of travel.

6. Transport vehicle (1) according to claim 6, **characterised in that** the front supports (18, 19) are oriented at a vertical spacing so as to be in parallel with one other.

7. Transport vehicle (1) according to at least one of the preceding claims, **characterised in that** the towbar (6) is connected to both the upper (18) and the lower (19) of the at least two front supports (18, 19).

## Revendications

1. Véhicule de transport (1) en particulier pour des matériaux agricoles en vrac, comprenant un dispositif d'attelage (6) monté sur un cadre-support (3) qui s'appuie sur le sol par l'intermédiaire d'un châssis (4) et de roues (5) pour permettre d'atteler le véhicule de transport (1) à un véhicule-tracteur, ainsi qu'une structure de conteneur de charge destinée à être chargé par le haut et équipée d'une paroi arrière (11) susceptible d'être ouverte et d'une plateforme de chargement (12) munie d'un convoyeur au sol (13) permettant de décharger le conteneur de charge (8), la plateforme de chargement (12) comprenant, une zone inclinée vers l'aval dans la direction de déplacement (F) dans la zone située entre le châssis (4) et l'extrémité avant de cette plateforme de chargement (12),
**caractérisé en ce que** le cadre-support (3) est réalisé au niveau de sa face frontale (17) de façon à offrir la possibilité d'appliquer simultanément des forces transmises par le dispositif d'attelage (6) au moins dans deux plans verticaux situés à distance l'un de l'autre, pour permettre une application simultanée des forces transmises par le dispositif d'attelage (6), la distance entre ces plans verticaux situés à distance l'un de l'autre correspondant environ à la différence de hauteur de la plateforme de chargement (12) abaissée dans sa zone avant, les forces transmises par le dispositif d'attelage (6) au niveau des points d'articulation de ce dispositif (6) dans les plans verticaux situés à distance l'un de l'autre étant appliquées sous la forme de forces de traction et de forces de compression dans des triangles latéraux de cadre que forme le cadre support adapté à la plateforme de chargement abaissée sur les côtés du véhicule.

2. Véhicule de transport (1) conforme à la revendication 1, **caractérisé en ce que** le dispositif d'attelage (6) est réalisé en plusieurs parties et comporte un dispositif de réglage.

3. Dispositif de transport (1) conforme à la revendication 2, **caractérisé en ce que** le dispositif d'attelage (6) en plusieurs parties comporte au moins un actionneur (7) commandable à distance.

4. Véhicule de transport (1) conforme à au moins l'une des revendications précédentes, **caractérisé en ce que** le convoyeur au sol (13) est constitué par au moins un convoyeur sans fin rotatif.

5. Véhicule de transport (1) conforme à au moins l'une des revendications précédentes, **caractérisé en ce que** le cadre support (3) comporte sur sa face frontale (17) située dans la direction de transport (F) au moins deux supports frontaux (18, 19) orientés transversalement à la direction de déplacement.

6. Véhicule de transport (1) conforme à la revendication 5, **caractérisé en ce que** les supports frontaux (18, 19) sont orientés parallèlement écartés verticalement l'un de l'autre.

7. Véhicule de transport (1) conforme à au moins l'une des revendications précédentes, **caractérisé en ce que** le dispositif d'attelage (6) est relié au support frontal supérieur (18) ainsi qu'au support frontal inférieur (19) parmi les supports frontaux (18, 19) qui sont au moins au nombre de deux.
